# EUROPEAN PATENT APPLICATION

(11) **EP 4 818 538 A1**
(43) Date of publication of application: **07.10.2026**
(21) Application number: 26157305.9
(22) Date of filing: 09.02.2026
(51) Int. Cl.: F16C 7/02, F01B 9/02

(54) **CONNECTING ROD FOR AN INTERNAL COMBUSTION ENGINE**

(30) Priority: 06.03.2025 IN 202541020181
(71) Applicant: Cummins, Inc., Columbus, Indiana 47201 (US)
(72) Inventor: KUMAR, Vikram, 813203 Kahalgaon (IN); PAYGUDE, Sachin, 411038 Pune (IN); RAO, Nikhil, 411038 Pune (IN); TIWARI, Anil, 410506 Pune (IN); APTE, Sayali, 400002 Mumbai (IN); SAMB, Gaurav, 411037 Pune (IN); M S, Chandrashekara, 571605 Mandya (IN)
(74) Representative: Cleveland Scott York

(57) **Abstract**

A connecting rod includes a connecting rod body having a piston end, an opposing crank end, and a shank extending between the piston and crank ends. The connecting rod body aligns along a longitudinal plane that extends between respective centers of the piston and crank ends. The shank has a cross-sectional area that is symmetric about the longitudinal plane. The shank includes a web having a web wall that includes a central portion. The web wall defines a pair of first cavities and a pair of second cavities wherein the central portion is positioned between the pair of first cavities and the pair of second cavities such that the first cavities are offset from the second cavities. The first cavities are larger than the second cavities. The first cavities are positioned closer to the piston end and the second cavities are positioned closer to the crank end.

## Description

### TECHINICAL FIELD

The present relates generally to a connecting rod for an internal combustion engine, the connecting rod having a pair of first cavities offset from a pair of second cavities.

### BACKGROUND

Some engines include an offset crankshaft to improve performance and reduce noises. An offset crankshaft occurs when a longitudinal axis of the cylinder in which the piston reciprocates does not coincide with a crankshaft axis of rotation. For example, the crankshaft may be centered to the left or right of the cylinder axis. As the crankshaft rotates and a connecting arm swings inside a cavity of an engine block there is a small clearance on the side of the cavity that the crankshaft axis is offset towards. Additionally, since the connecting arm is offset then during operation of the connecting arm high bending loads or stress in the connecting arm can occur.

In the case of an engine with an offset crankshaft, a notch is often provided in the engine block to maintain clearance between the engine block and the connecting rod. The notch is located towards the side nearest the offset crankshaft axis. The notch can cause bore scuffing and increased oil consumption.

Therefore, further contributions in this area of technology are needed to maintain bore clearance.

### SUMMARY

Various aspects of the present application are contemplated. Various aspects of the present application are contemplated. According to one aspect, a connecting rod for an internal combustion engine, the connecting rod comprising: a connecting rod body having a piston end, an opposing crank end, and a shank extending between the piston end and the crank end, wherein the connecting rod body aligns along a longitudinal plane that extends between respective centers of the piston end and the crank end; and wherein the shank has a cross-sectional area that is symmetric about the longitudinal plane, the shank includes a web having a web wall that defines a pair of first cavities offset from a pair of second cavities by a central portion, wherein the first cavities are positioned closer to the piston end and the second cavities are positioned closer to the crank end.

In one embodiment, wherein the shank includes a first flange separated by a second flange, and the web wall extends between the first and second flanges.

In one embodiment, wherein each of the first flange, the second flange, and the central portion have a corresponding width as measured parallel to the longitudinal plane.

In one embodiment, wherein the widths are substantially equal as measured relative to a cross-section of the web at the central portion.

In one embodiment, wherein the width of the central portion is less than either the width of the first flange or the width of the second flange as measured relative to a cross-section of the web at the central portion.

In one embodiment, wherein the web has a cross-sectional area that is defined by the first cavities, the second cavities, and the central portion such that the web has a variable stiffness relative to the first cavities, the second cavities, and the central portion as measured relative to the longitudinal plane.

In one embodiment, wherein the first cavities are larger than the second cavities.

In one embodiment, wherein the web wall for each of the first cavities includes a first radial portion defined by a first radius near the piston end and a second radial portion defined by a second radius near the crank end, wherein the first radius is larger than the second radius.

In one embodiment, wherein the web wall for each of the second cavities includes a first side positioned closest to the piston end and a second side positioned closest to the crank end, the first side being longer than the second side.

In one embodiment, wherein the web wall for each of the second cavities includes a pair of legs that span between the first side and the second side to form a trapezoidal shape.

According to another aspect, a connecting rod for an internal combustion engine, the connecting rod comprising: a connecting rod body having a piston end, an opposing crank end, and a shank extending between the piston end and the crank end, wherein the connecting rod body aligns along a longitudinal plane that extends between respective centers of the piston end and the crank end; and wherein the shank has a cross-sectional area that is symmetric about the longitudinal plane, the shank includes a web having a web wall that includes a central portion, the web wall defines a pair of first cavities and a pair of second cavities wherein the central portion is positioned between the pair of first cavities and the pair of second cavities such that the first cavities are offset from the second cavities, wherein the first cavities are larger than the second cavities.

In one embodiment, wherein the first cavities are positioned closer to the piston end and the second cavities are positioned closer to the crank end.

In one embodiment, wherein the shank includes a first flange and a second flange arranged such that the web wall extends between the first and the second flanges, each of the first flange, the second flange, and the central portion have a corresponding width as measured parallel to the longitudinal plane.

In one embodiment, wherein the widths are substantially equal at the central portion as measured relative to a cross-section of the web at the central portion.

In one embodiment, wherein the central portion has a cross-sectional area that is greater than a cross-sectional area of the web that includes either of the first cavities or the second cavities as measured perpendicular to the longitudinal plane.

In one embodiment, wherein the web wall for each of the first cavities includes a first radial portion defined by a first radius near the piston end and a second radial portion defined by a second radius near the crank end, wherein the first radius is larger than the second radius.

In one embodiment, wherein the web wall for each of the second cavities includes a first side closest to the piston end and a second side closest to the crank end, the first side being longer than the second side.

In one embodiment, wherein the web wall for each of the second cavities includes a pair of legs that span between the first side and the second side.

In one embodiment, wherein the shank has a length measured perpendicular to the longitudinal plane wherein the length tapers from the piston end to the central portion.

In one embodiment, wherein the length of the shank flares from the central portion to the crank end.

This summary is provided to introduce a selection of concepts that are further described below in the illustrative embodiments. This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The concepts described herein are illustrative by way of example and not by way of limitation in the accompanying figures. For simplicity and clarity of illustration, elements illustrated in the figures are not necessarily drawn to scale. Where considered appropriate, references labels have been repeated among the figures to indicate corresponding or analogous elements.
FIG. 1 is a front view of a connecting rod assembled with an illustrative embodiment of an internal combustion engine;
FIG. 2 is front view of the connecting rod of FIG. 1; and
FIG. 3 is a cross-sectional view taken along line 3-3 of the connecting rod of FIG. 2.

### DETAILED DESCRIPTION OF ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, any alterations and further modifications in the illustrated embodiments, and any further applications of the principles of the invention as illustrated therein as would normally occur to one skilled in the art to which the invention relates are contemplated herein.

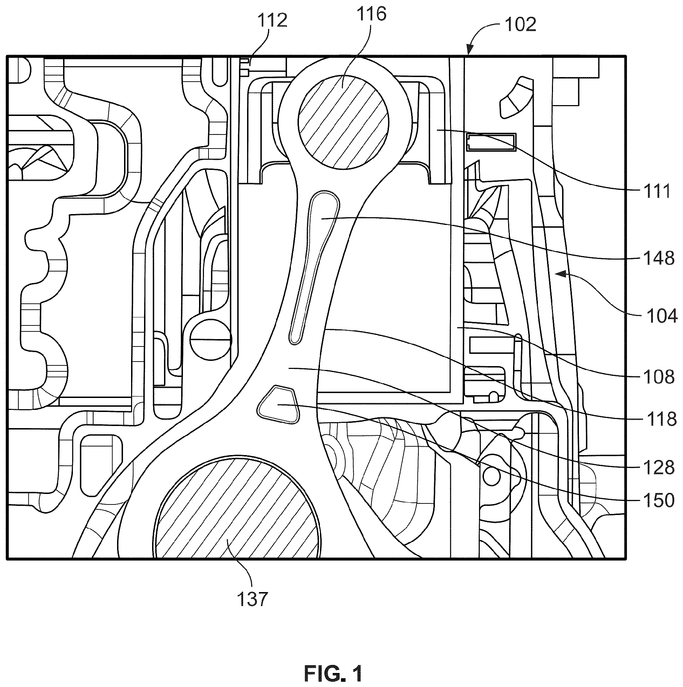

FIG. 1 illustrates an exemplary embodiment of an engine 102. Engine 102 is depicted in FIG. 1 and described herein as a diesel-fueled, internal combustion engine. However, it is contemplated that engine 102 may embody any other type of internal combustion engine such as, for example, a gasoline or gaseous fuel powered engine or a hydrogen internal combustion engine. It is contemplated that engine 102 may include any number of combustion chambers and that the combustion chambers may be disposed in an "in-line" configuration, in a "V" configuration, or in any other conventional configuration. In one embodiment, in the engine block does not include a notch since the notch is not required to accommodate a symmetric connecting rod.

Engine 102 includes an engine block 104 at least partially defining a cylinder 108, and a cylinder liner may optionally be disposed in cylinder 108. A piston 111 may be located to reciprocate within the cylinder 108 or the cylinder liner, if present. Piston 111, together with cylinder liner (if present) and a cylinder head (not shown), may form a combustion chamber 112. Engine block 104 may also include any of a combustion air inlet, an air scavenging channel, and an exhaust outlet (not shown) in communication with combustion chamber 112. Additionally, a piston pin 116 may connect piston 111 to a connecting rod 118. A crankshaft pivot pin 137 may connect a crankshaft (not shown) to the connecting rod 118.

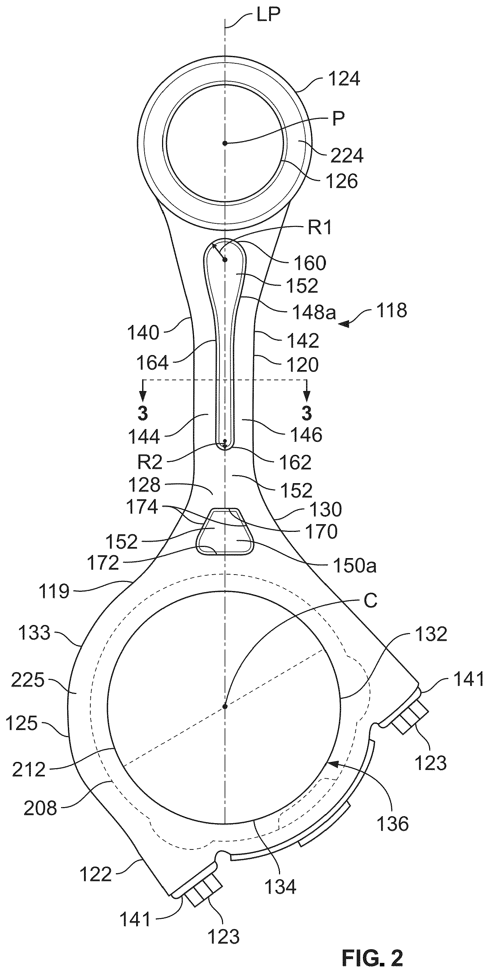

FIG. 2 illustrates the connecting rod 118 that includes a connecting rod body 119 having a piston end 124, an opposing crank end 125, and a shank 120 extending between the piston and the crank ends 124 and 125, respectively. The shank 120 extends along a longitudinal plane LP that spans between respective centers of the piston and the crank ends 124 and 125, respectively. The longitudinal length of the connecting rod body 119 can be varied. The longitudinal plane LP extends between a center axis P at the piston end 124 and a center axis C at the crank end 125 of the connecting rod 118. In the illustrated embodiment, the piston end 124 is smaller than the crank end 125.

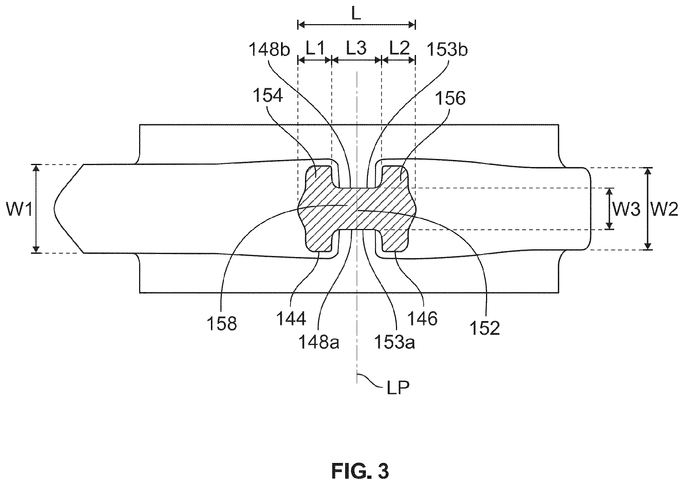

The shank 125 has an I-beam cross-sectional shape that is symmetrical relative to the longitudinal plane LP as illustrated in FIG. 3 and described below. The shank 125 has a symmetric stiffness relative to the longitudinal plane LP. The shank 125 includes a central portion 128 that provides selective rigidity and additional stiffness to the shank 125 to prevent bending of the shank 125 during operation of the connecting rod 118.

Piston end 124 includes a bore 126 that in some embodiments is sized to receive a bearing (not illustrated). If the bearing is assembled with the bore 126, then the bearing has an internal diameter that is sized to receive the piston pin 116. In other embodiments, the bore 126 is sized to receive the piston pin 116 without the bearing. The piston end 124 has a piston annular wall 224 that is defined by and surrounds the bore 126. The piston annular wall 224 has a piston annular wall thickness that is optimized due to the unique configuration of the connecting rod 118.

The crank end 125 includes a yoke 130 and a cap 122. Yoke 130 includes a semi-circular opening 132 and a shoulder 133. Cap 122 includes a semi-circular opening 134 that, together with semi-circular opening 132, define a crank end bore 136 for receiving the crankshaft pivot pin 137 of the engine 102. In some embodiments, a bearing is disposed within semi-circular openings 132, 134 between the crankshaft and yoke 130 and cap 122. It is contemplated that bearing may be a two-piece bearing for assembly purposes. Bearing may be a friction-type bearing, fabricated from a malleable material, for example aluminum. It should be noted, however, that any other suitable material may alternatively be utilized for bearing. In addition, cap 122 may include a pair of shoulders 141 configured to receive a plurality of bolts 123, which allow cap 122 to be removably connected to crank end 125 of connecting rod 118. The crank end 125 has a crank annular wall 225 that is defined by and surrounds the crank end bore 136. The crank annular wall 225 has a crank annular wall thickness that is optimized due to the unique configuration of the connecting rod 118.

As shown in FIG. 2, the cap 122 may be connected to the yoke 130 at parting lines 208. In one embodiment, cap 122 and yoke 130 may have fractured, uneven surfaces that engage each other at parting lines 208, though other suitable forms of complimentary surfaces may alternatively be utilized. For example, in alternative embodiments, serrated or substantially flat machined surfaces may join the cap 122 and the yoke 130 at parting lines 208. The surfaces of cap 122 and yoke 130 at parting lines 208 may define a separation plane 212.

The shank 120 extends between the piston end 124 and the opposing crank end 125. The shank 120 has a cross-sectional area that is symmetric about the longitudinal plane LP as illustrated in FIG. 3. The shank 120 has an I-beam cross-sectional shape. The shank 120 includes a web 152 having a web wall 153a, 153b that defines a pair of first cavities 148a, 148b offset from a pair of second cavities 150a, 150b. As can be appreciated, the web wall 153a corresponds to the first cavity 148a and the second cavity 150a. The web wall 153b corresponds to the first cavity 148b and the second cavity 150b. In the illustrated embodiment in FIG. 2, the first cavities 148a, 148b are vertically offset from the second cavities 150a, 150b. The first cavities 148a, 148b are closer to the piston end 124 and the second cavities 150a, 150b are closer to the crank end 125. The web 152 includes the central portion 128 located between the first cavities 148a, 148b and the second cavities 150a, 150b. The longitudinal plane LP extends through the web 152.

In the illustrated embodiment, the first cavities 148a, 148b are larger than the second cavities 150a, 150b. In other embodiments, the second cavities 150a, 150b may be larger than the first cavities 148a, 148b. The first cavities 148a, 148b are shaped differently than the second cavities 150a, 150b. The first cavities 148a, 148b and the second cavities 150a, 150b are disjointed or not connected to each other.

The first cavities 148a, 148b are sized relative to the piston end 124 to provide flexibility of piston annular wall 224 at the piston end 124 for improved joint performance. Inside the cylinder 108, when the fuel is injected the piston 111 pushes the piston pin 116 downwards which in turn pushes the connecting rod 118 downwards. As a result, there is a very high load that develops at the joint between the bottom of the piston pin 116, the bore 126, the piston annular wall 224, and the shank 120 near the piston annular wall 224. The first cavities 148a, 148b are beneficial to reduce the stiffness of the shank 120 to reduce the pressure that develops therein as a result of the high load during operation of the cylinder 108 and the piston 111. The first cavities 148a, 148b allow for compliance or flexibility of the piston annular wall 224 and the shank 120 near the piston annular wall 224. The width, length, depth, and size of the first cavities 148a, 148b may be different for different cylinder pressures and sizes of engines.

The second cavities 150a, 150b are sized relative to the crank end 125 to provide flexibility at the crank annular wall 225 for improved joint performance. During operation of the cylinder 108, the connecting rod 118 pushes in a downward direction on the crankshaft pivot pin 137 and the crankshaft (not illustrated) such that a high pressure develops at the crank end 125 including the semi-circular opening 132, the yoke 130, the cap 122, and the shank 120 near the yoke 130. The second cavities 150a, 150b are beneficial to reduce the stiffness of the shank 120 to reduce the pressure that develops therein as a result of the high load during operation of the cylinder 108, the piston 111, and the crankshaft (not illustrated). The second cavities 150a, 150b allow for compliance or flexibility of the crank annular wall 225 and the shank 120 near the yoke 130. The width, length, depth, and size of the second cavities 150a, 150b may be different for different cylinder pressures and sizes of engines.

The first cavities 148a, 148b and the second cavities 150a, 150b correspond to material removed from the shank 120 which may induce bending forces. Beneficially, the central portion 128 provides additional rigidity and stiffness to the shank 125 to prevent bending of the shank 125 during operation of the connecting rod 118 and resist bending forces. The first cavities 148a, 148b and the second cavities 150a, 150b are directionally parallel to the longitudinal plane LP of the connecting rod 118.

The web wall 153a, 153b for each of the first cavities 148a, 148b includes a first radial portion 160 defined by a first radius R1 near the piston end 124 and a second radial portion 162 defined by a second radius R2 near the crank end 125 wherein the first radius R1 is larger than the second radius R2. In other embodiments, the web wall 153a, 153b for each of the first cavities 148a, 148b is configured differently such that the first radial portion 160 is not defined by the first radius R1 wherein first radial portion 160 is flat or curvilinear in shape. In other embodiments, the web wall 153a, 153b for each of the first cavities 148a, 148b is configured differently wherein the second radial portion 162 is not defined by the second radius R2 such that the second radial portion 162 is flat or curvilinear in shape. The web wall 153a, 153b for each of the first cavities 148a, 148b includes a pair of legs 164 that span between the first radial portion 160 and the second radial portion 162. The pair of legs 164 may be straight or curved to correspond with the shank 120 and any taper or narrowing of the shank 120 relative to the piston end 124 and the crank end 125. Beneficially, the first radial portion 160, the legs 164, and the second radial portion 162 form an elongated shape that corresponds to a maximum amount of material removed from the shank 120 form a lightweight connecting rod 118.

The web wall 153a, 153b for each of the second cavities 150a, 150b include a first side 170 closest to the piston end 124 and a second side 172 closest to the crank end 125 wherein the first side 170 is larger or longer than the second side 172. The web wall 153a, 153b for each of the second cavities 150a, 150b includes a pair of legs 174 that span between the first side 170 and the second side 172. In the illustrated embodiment, the first side 170, the legs 174, and the second side 172 are arranged to form a trapezoidal shape for the second cavities 150a, 150b. Beneficially, the trapezoidal shape represents a maximum amount of material removed from the shank 120 form a lightweight connecting rod 118. In other embodiments, the first side 170, the legs 174, and the second side 172 are arranged to form a different shape for the second cavities 150a, 150b.

The shank 120 includes a first flange 144 separated by a second flange 146 wherein the web 152 and the web wall 153a, 153b extend between the first flange 144 and the second flange 146. The first flange 144 extends between the piston end 124 and the opposing crank end 125 and includes the first side surface 140. The second flange 146 extends between the piston end 124 and the opposing crank end 125 and includes the second side surface 142. The first flange 144 includes a first side surface 140 and the second flange 146 includes a second side surface 142. The first flange 144 and the second flange 142 may taper or narrow relative to the bore 126 of the piston end 124. The first flange 144 and the second flange 142 may taper or narrow relative to the crank end bore 136 of the crank end 125. The first flange 144 and the second flange 146 are positioned equidistant to the longitudinal plane LP such that the shank 120 is symmetric relative to the longitudinal plane LP.

Turning to FIG. 3, the shank 120 having an I-beam cross-sectional shape that is symmetrical relative to the longitudinal plane LP is illustrated. The first flange 144 has a cross-sectional first length L1 as measured perpendicular to the longitudinal plane and a first width W1 as measured parallel to the longitudinal plane that form a first cross-sectional area 154. The second flange 146 has a cross-sectional second length L2 as measured perpendicular to the longitudinal plane and a second width W2 as measured parallel to the longitudinal plane that form a second cross-sectional area 156. The first width W1 of the first flange 144 is the same as or substantially the same as the second width W2 of the second flange 146 such that the shank 120 has an even or constant width of the first and second flanges 144 and 146, respectively. The second length L2 of the second flange 146 is the same as or substantially the same as the first length L1 of the first flange 144.

The web 152 has a cross-sectional length L3 as measured perpendicular to the longitudinal plane and a web width W3 as measured parallel to the longitudinal plane. The web width W3 of the web wall 153a, 153b further defines a depth of the first cavities 148a, 148b and a depth of the second cavities 150a, 150b relative to the first width W1 and the second width W2. The web 152 has a cross-sectional area 158 that is defined by the first cavities 148a, 148b, the second cavities 150a, 150b, and the central portion 128 such that the web 152 has a variable stiffness relative to the first cavities 148a, 148b, the second cavities 150a, 150b, and the central portion 128 as measured relative to the longitudinal plane LP. The central portion 128 has a cross-sectional area that is greater than a cross-sectional area of the web 152 that includes either of the first cavities 148a, 148b, or the second cavities 150a, 150b as measured perpendicular to the longitudinal plane.

In one embodiment, the widths W1, W2, and W3, respectively, of the first flange 144, the second flange 146, and the web 152 at the central portion 128 are substantially equal to each other as measured relative to a cross-section of the web 152 at the central portion 128. In another embodiment, the width W3 of the web 152 at the central portion 128 is less than either of the widths W1 and W2, respectively, of the first flange 144 and the second flange 146 as measured relative to a cross-section of the web 152 at the central portion 128.

The shank 120 has a total length L measured perpendicular to the longitudinal plane LP that includes lengths L1, L2, L3. The total length L of the shank 120 tapers from the piston end 124 to the central portion 128. The total length L of the shank 120 flares from the central portion 128 to the crank end 125.

The unique configuration of the web 152 including the first cavities 148a, 148b, the second cavities 150a, 150b, the central portion 128, and the symmetric shank 120 relative to the longitudinal plane LP enables optimization of an annular wall thickness of the piston end 124 and optimization of an annular wall thickness of the crank end 125. The depth and shape of the first cavities 148a, 148b enables optimization of the piston annular wall thickness of the piston annular wall 224 and deformation of the piston annular wall 224. Additionally, the depth and shape of the second cavities 150a, 150b enables optimization of the crank annular wall thickness of the crank end 125 and deformation of the crank annular wall 225. The symmetric shank 120 enables the first flange 140 to be equal to the second flange 142.

As illustrated in FIG. 3, the combined cross-sectional shape of the first flange 144, the web 152, and the second flange 146 collectively form an I-beam cross-sectional shape for the shank 120. The I-section of the shank 120 is lightweight compared to a solid cross-sectional shape of other connecting rods. Additionally, the I-section of the shank 120 lowers the inertia forces compared to other connecting rods. This design provides high strength and rigidity while keeping the weight relatively low. The flanges 144, 146 (top and bottom parts of the "I") resist bending, while the web 152 (the vertical part) handles shear forces.

As is evident from the figures and text presented above, a variety of aspects of the present disclosure are contemplated.

Various aspects of the present application are contemplated. According to one aspect, a connecting rod for an internal combustion engine, the connecting rod comprising: a connecting rod body having a piston end, an opposing crank end, and a shank extending between the piston end and the crank end, wherein the connecting rod body aligns along a longitudinal plane that extends between respective centers of the piston end and the crank end; and wherein the shank has a cross-sectional area that is symmetric about the longitudinal plane, the shank includes a web having a web wall that defines a pair of first cavities offset from a pair of second cavities by a central portion, wherein the first cavities are positioned closer to the piston end and the second cavities are positioned closer to the crank end.

In one embodiment, wherein the shank includes a first flange separated by a second flange, and the web wall extends between the first and second flanges.

In one embodiment, wherein each of the first flange, the second flange, and the central portion have a corresponding width as measured parallel to the longitudinal plane.

In one embodiment, wherein the widths are substantially equal as measured relative to a cross-section of the web at the central portion.

In one embodiment, wherein the width of the central portion is less than either the width of the first flange or the width of the second flange as measured relative to a cross-section of the web at the central portion.

In one embodiment, wherein the web has a cross-sectional area that is defined by the first cavities, the second cavities, and the central portion such that the web has a variable stiffness relative to the first cavities, the second cavities, and the central portion as measured relative to the longitudinal plane.

In one embodiment, wherein the first cavities are larger than the second cavities.

In one embodiment, wherein the web wall for each of the first cavities includes a first radial portion defined by a first radius near the piston end and a second radial portion defined by a second radius near the crank end, wherein the first radius is larger than the second radius.

In one embodiment, wherein the web wall for each of the second cavities includes a first side positioned closest to the piston end and a second side positioned closest to the crank end, the first side being longer than the second side.

In one embodiment, wherein the web wall for each of the second cavities includes a pair of legs that span between the first side and the second side to form a trapezoidal shape.

According to another aspect, a connecting rod for an internal combustion engine, the connecting rod comprising :a connecting rod body having a piston end, an opposing crank end, and a shank extending between the piston end and the crank end, wherein the connecting rod body aligns along a longitudinal plane that extends between respective centers of the piston end and the crank end; and wherein the shank has a cross-sectional area that is symmetric about the longitudinal plane, the shank includes a web having a web wall that includes a central portion, the web wall defines a pair of first cavities and a pair of second cavities wherein the central portion is positioned between the pair of first cavities and the pair of second cavities such that the first cavities are offset from the second cavities, wherein the first cavities are larger than the second cavities.

In one embodiment, wherein the first cavities are positioned closer to the piston end and the second cavities are positioned closer to the crank end.

In one embodiment, wherein the shank includes a first flange and a second flange arranged such that the web wall extends between the first and the second flanges, each of the first flange, the second flange, and the central portion have a corresponding width as measured parallel to the longitudinal plane.

In one embodiment, wherein the widths are substantially equal at the central portion as measured relative to a cross-section of the web at the central portion.

In one embodiment, wherein the central portion has a cross-sectional area that is greater than a cross-sectional area of the web that includes either of the first cavities or the second cavities as measured perpendicular to the longitudinal plane.

In one embodiment, wherein the web wall for each of the first cavities includes a first radial portion defined by a first radius near the piston end and a second radial portion defined by a second radius near the crank end, wherein the first radius is larger than the second radius.

In one embodiment, wherein the web wall for each of the second cavities includes a first side closest to the piston end and a second side closest to the crank end, the first side being longer than the second side.

In one embodiment, wherein the web wall for each of the second cavities includes a pair of legs that span between the first side and the second side.

In one embodiment, wherein the shank has a length measured perpendicular to the longitudinal plane wherein the length tapers from the piston end to the central portion.

In one embodiment, wherein the length of the shank flares from the central portion to the crank end.

In the above description, certain relative terms may be used such as "up," "down," "upper," "lower," "horizontal," "vertical," "left," "right," "proximal," "distal," and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object.

Reference throughout this specification to "one embodiment," "an embodiment," or similar language means that a particular feature, structure, or characteristic described in connection with the embodiment is included in at least one embodiment of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the present disclosure, however, absent an express correlation to indicate otherwise, an implementation may be associated with one or more embodiments.

The described features, structures, advantages, and/or characteristics of the subject matter of the present disclosure may be combined in any suitable manner in one or more embodiments and/or implementations. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In some instances, the benefit of simplicity may provide operational and economic benefits and exclusion of certain elements described herein is contemplated as within the scope of the invention herein by the inventors to achieve such benefits. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

The present subject matter may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A connecting rod for an internal combustion engine, the connecting rod comprising:
a connecting rod body having a piston end, an opposing crank end, and a shank extending between the piston end and the crank end, wherein the connecting rod body aligns along a longitudinal plane that extends between respective centers of the piston end and the crank end; and
wherein the shank has a cross-sectional area that is symmetric about the longitudinal plane, the shank includes a web having a web wall that defines a pair of first cavities offset from a pair of second cavities by a central portion, wherein the first cavities are positioned closer to the piston end and the second cavities are positioned closer to the crank end.

2. The connecting rod of claim 1, wherein the shank includes a first flange separated by a second flange, and the web wall extends between the first and second flanges.

3. The connecting rod of claim 2, wherein each of the first flange, the second flange, and the central portion have a corresponding width as measured parallel to the longitudinal plane.

4. The connecting rod of claim 3, wherein the widths are substantially equal as measured relative to a cross-section of the web at the central portion; and/or
wherein the width of the central portion is less than either the width of the first flange or the width of the second flange as measured relative to a cross-section of the web at the central portion.

5. The connecting rod of claim 1, wherein the web has a cross-sectional area that is defined by the first cavities, the second cavities, and the central portion such that the web has a variable stiffness relative to the first cavities, the second cavities, and the central portion as measured relative to the longitudinal plane; and/or
wherein the first cavities are larger than the second cavities; and/or
wherein the web wall for each of the first cavities includes a first radial portion defined by a first radius near the piston end and a second radial portion defined by a second radius near the crank end, wherein the first radius is larger than the second radius.

6. The connecting rod of claim 1, wherein the web wall for each of the second cavities includes a first side positioned closest to the piston end and a second side positioned closest to the crank end, the first side being longer than the second side.

7. The connecting rod of claim 6, wherein the web wall for each of the second cavities includes a pair of legs that span between the first side and the second side to form a trapezoidal shape.

8. A connecting rod for an internal combustion engine, the connecting rod comprising:
a connecting rod body having a piston end, an opposing crank end, and a shank extending between the piston end and the crank end, wherein the connecting rod body aligns along a longitudinal plane that extends between respective centers of the piston end and the crank end; and
wherein the shank has a cross-sectional area that is symmetric about the longitudinal plane, the shank includes a web having a web wall that includes a central portion, the web wall defines a pair of first cavities and a pair of second cavities wherein the central portion is positioned between the pair of first cavities and the pair of second cavities such that the first cavities are offset from the second cavities, wherein the first cavities are larger than the second cavities.

9. The connecting rod of claim 8, wherein the first cavities are positioned closer to the piston end and the second cavities are positioned closer to the crank end; and/or
wherein the central portion has a cross-sectional area that is greater than a cross-sectional area of the web that includes either of the first cavities or the second cavities as measured perpendicular to the longitudinal plane; and/or
wherein the web wall for each of the first cavities includes a first radial portion defined by a first radius near the piston end and a second radial portion defined by a second radius near the crank end, wherein the first radius is larger than the second radius.

10. The connecting rod of claim 8, wherein the shank includes a first flange and a second flange arranged such that the web wall extends between the first and the second flanges, each of the first flange, the second flange, and the central portion have a corresponding width as measured parallel to the longitudinal plane.

11. The connecting rod of claim 10, wherein the widths are substantially equal at the central portion as measured relative to a cross-section of the web at the central portion.

12. The connecting rod of claim 8, wherein the web wall for each of the second cavities includes a first side closest to the piston end and a second side closest to the crank end, the first side being longer than the second side.

13. The connecting rod of claim 12, wherein the web wall for each of the second cavities includes a pair of legs that span between the first side and the second side.

14. The connecting rod of claim 8, wherein the shank has a length measured perpendicular to the longitudinal plane wherein the length tapers from the piston end to the central portion.

15. The connecting rod of claim 14, wherein the length of the shank flares from the central portion to the crank end.
